# EUROPEAN PATENT APPLICATION

(11) **EP 4 632 958 A1**
(43) Date of publication of application: **15.10.2025**
(21) Application number: 25169460.0
(22) Date of filing: 09.04.2025
(51) Int. Cl.: H01R 11/28, B60R 16/00, H01M 50/502, H01R 13/641, H01R 4/02, H01R 4/34

(54) **CONNECTOR AND CONNECTOR ASSEMBLY**

(30) Priority: 12.04.2024 CN 202410446422
(71) Applicant: Tyco Electronics (Shanghai) Co., Ltd., Pilot Free Trade Zone Shanghai 200131 (CN)
(72) Inventor: Feng, Qi, Shanghai, 200233 (CN); Li, Ziwei, Shanghai, 200233 (CN); Yang, Yuchen, Shanghai, 200233 (CN)
(74) Representative: Grünecker Patent- und Rechtsanwälte PartG mbB

(57) **Abstract**

The present invention discloses a connector and a connector assembly. The connector comprises: a housing (10); a high-voltage module which is provided in the housing (10) and is suitable for being fastened to a high-voltage mating module of a mating connector (2) to electrically connect with the high-voltage mating module; and a detection component (11) which is rotatably installed on the exterior of the housing (10) for detecting whether the high-voltage module has been fastened to the high-voltage mating module. When the high-voltage module is not fastened to the high-voltage mating module, the high-voltage module is in a position that interferes with the detection component (11), so that the detection component (11) cannot be rotated from an initial position to a detection position; when the high-voltage module has been fastened to the high-voltage mating module, the high-voltage module is in a position that does not interfere with the detection component (11), allowing the detection component (11) to be rotated from the initial position to the detection position. Therefore, the present invention can accurately check whether the high-voltage module has been fastened to the high-voltage mating module using the detection component, improving the accuracy and efficiency of the inspection.

## Description

### CROSS-REFERENCE TO RELATED APPLICATION

This application claims the benefit of Chinese Patent Application No. CN202410446422.5 filed on April 12, 2024 in the State Intellectual Property Office of China, the whole disclosure of which is incorporated herein by reference.

### BACKGROUND OF THE INVENTION

### Field of the Invention

The present invention relates to a connector and a connector assembly comprising the connector.

### Description of the Related Art

In the prior art, a high-voltage connector typically includes a housing and a terminal and a fastener arranged within the housing. A mounting port is formed in the housing, and the fastener enters into the housing from the mounting port. The fastener passes through the terminal and is suitable for threaded connection with the mating terminal or a nut inside the high-voltage mating connector, used to fasten the terminal to the mating terminal to achieve reliable electrical contact between the terminal and the mating terminal.

In the prior art, to prevent forgetting to tighten the fastener, visual inspection is usually used. However, it is difficult to accurately check whether the fastener has been tightened with the naked eyes, which can easily lead to errors and still pose a risk of fastener not being tightened. Therefore, the scheme of visually inspecting whether the fastener has been tightened has the problems of poor accuracy and low inspection efficiency. Once there is a situation where the fastener is not tightened, it can lead to the failure of high-voltage connection products and even cause safety accidents.

### SUMMARY OF THE INVENTION

The present invention has been made to overcome or alleviate at least one aspect of the above mentioned disadvantages.

According to an aspect of the present invention, there is provided a connector. The connector comprises: a housing; a high-voltage module which is provided in the housing and is suitable for being fastened to a high-voltage mating module of a mating connector to electrically connect with the high-voltage mating module; and a detection component which is rotatably installed on the exterior of the housing for detecting whether the high-voltage module has been fastened to the high-voltage mating module. When the high-voltage module is not fastened to the high-voltage mating module, the high-voltage module is in a position that interferes with the detection component, so that the detection component cannot be rotated from an initial position to a detection position; when the high-voltage module has been fastened to the high-voltage mating module, the high-voltage module is in a position that does not interfere with the detection component, allowing the detection component to be rotated from the initial position to the detection position.

According to an exemplary embodiment of the present invention, the high-voltage module comprises a fastener which is suitable for threaded connection with the high-voltage mating module and is used to fasten the high-voltage module to the high-voltage mating module. When the fastener is not tightened to the high-voltage mating module, the fastener is in a position that interferes with the detection component, so that the detection component cannot be rotated from the initial position to the detection position; when the fastener has been tightened to the high-voltage mating module, the fastener is moved to a position that does not interfere with the detection component, so that the detection component can be rotated from the initial position to the detection position.

According to another exemplary embodiment of the present invention, the connector comprises multiple fasteners, and the detection component is used to simultaneously detect whether all fasteners have been tightened to the high-voltage mating module; when any one of the multiple fasteners is not tightened to the high-voltage mating module, the detection component cannot be rotated from the initial position to the detection position; when the multiple fasteners have all been tightened to the high-voltage mating module, the detection component can be rotated from the initial position to the detection position.

According to another exemplary embodiment of the present invention, the fastener has an outer end exposed from the housing, which is adapted to be engaged with an operating tool to be able to tighten or loosen the fastener by the operating tool engaged with the outer end; when the fastener is not tightened to the high-voltage mating module, the outer end of the fastener is in a position that interferes with the detection component, so that the detection component cannot be rotated from the initial position to the detection position; when the fastener has been tightened to the high-voltage mating module, the outer end of the fastener is in a position that does not interfere with the detection component, allowing the detection component to be rotated from the initial position to the detection position.

According to another exemplary embodiment of the present invention, the detection component includes: a pair of side arms, one ends of which are rotatably connected to both sides of the housing, respectively; and a top cover connected between the other ends of the pair of side arms. When the fastener is not tightened to the high-voltage mating module, the outer end of the fastener interferes with the top cover of the detection component, preventing the detection component from being rotated from the initial position to the detection position; when the fastener has been tightened to the high-voltage mating module, the outer end of the fastener does not interfere with the top cover of the detection component, allowing the detection component to be rotated from the initial position to the detection position.

According to another exemplary embodiment of the present invention, pivot holes are respectively formed in one ends of the pair of side arms, and protruding pivot shafts are respectively formed on both sides of the housing, the pivot shafts are rotatably engaged with the pivot holes, allowing the detection component to rotate around the pivot shafts.

According to another exemplary embodiment of the present invention, when the detection component is in the initial position, the outer end of the fastener is exposed to the outside of the top cover of the detection component, so that the operating tool can engage with the outer end of the fastener to tighten or loosen the fastener.

According to another exemplary embodiment of the present invention, when the detection component is in the detection position, the outer end of the fastener is hidden in the top cover of the detection component, so that the operating tool cannot engage with the outer end of the fastener to prevent the tightened fastener from being accidentally loosened by the operating tool.

According to another exemplary embodiment of the present invention, a joint part suitable for engagement with the operating tool is formed on the top of the outer end of the fastener, so as to be able to tighten or loosen the fastener through the operating tool engaged with the joint part; when the detection component is in the detection position, the top cover of the detection component covers the joint part of the fastener, so that the operating tool cannot engage with the fastener to prevent the already tightened fastener from being accidentally loosened by the operating tool.

According to another exemplary embodiment of the present invention, the top cover of the detection component comprises a first side and a second side opposite to each other in the rotation direction of the detection component; when the detection component is in the initial position and the fastener is not tightened, the outer end of the fastener is pressed against the first side of the top cover of the detection component, so that the detection component cannot be rotated from the initial position to the detection position.

According to another exemplary embodiment of the present invention, a first positioning protrusion is formed on the first side of the top cover of the detection component, and a first positioning groove suitable for mating with the first positioning protrusion is formed on the outside of the housing; when the detection component is in the detection position, the first positioning protrusion is engaged with the first positioning groove to position the detection component at the detection position.

According to another exemplary embodiment of the present invention, a second positioning groove is formed on the second side of the top cover of the detection component, and a second positioning protrusion suitable for mating with the second positioning groove is formed on the outside of the housing; when the detection component is in the initial position, the second positioning protrusion is engaged with the second positioning groove to position the detection component at the initial position.

According to another exemplary embodiment of the present invention, the high-voltage module further comprises a terminal which is provided in the housing, the fastener is used to fasten the terminal of the connector to a mating terminal of the mating connector to ensure reliable electrical contact between the terminal and the mating terminal.

According to another exemplary embodiment of the present invention, the high-voltage module further comprises a cable, one end of which extends into the housing and is electrically connected to the terminal; when the terminal is fastened to the mating terminal, the cable is electrically connected to the mating terminal via the terminal.

According to another exemplary embodiment of the present invention, the fastener passes through the terminal and is suitable for threaded connection with the mating terminal or a nut inside the mating connector to fasten the terminal to the mating terminal.

According to another exemplary embodiment of the present invention, a mounting port is formed in the housing, and the fastener extends into the housing through the mounting port; the fastener comprises: a bolt which is suitable for threaded connection with the mating terminal or the nut inside the mating connector; and an end cap which is engaged to the head of the bolt and located outside the housing, used to cover the mounting port. When the bolt is tightened, the end cap covers the mounting port of the housing and makes electrical contact with the outer peripheral surface of the peripheral wall of the mounting port to prevent electromagnetic leakage.

According to another exemplary embodiment of the present invention, a joint part suitable for engagement with an operating tool is formed on the top of the end cap, so that the bolt can be tightened or loosened by the operating tool engaged with the joint part; when the bolt is not tightened, the end cap is in a position that interferes with the detection component, so that the detection component cannot be rotated from the initial position to the detection position; when the bolt has been tightened, the end cap is in a position that does not interfere with the detection component, allowing the detection component to be rotated from the initial position to the detection position.

According to another exemplary embodiment of the present invention, a first insulator is formed on the head of the bolt, and a second insulator is formed on the inner side of the end cap, the first insulator is engaged to the second insulator for engaging the bolt to the end cap and electrically isolating the bolt from the end cap.

According to another exemplary embodiment of the present invention, the fastener further comprises a sealing ring which is fitted onto the second insulator. When the bolt is tightened, the sealing ring is radially compressed between the second insulator and the inner peripheral surface of the peripheral wall of the mounting port to seal the mounting port.

According to another exemplary embodiment of the present invention, the terminal comprises: a first terminal which is flat and welded to one end of the cable; and a second terminal which is cylindrical and riveted to the first terminal. When the bolt is tightened, the end face of the second terminal makes axial electrical contact with the end face of the mating terminal to achieve electrical connection between the terminal and the mating terminal.

According to another aspect of the present invention, there is provided a connector assembly. The connector assembly comprises: the above connector; and a mating connector which is mated with the connector.

According to an exemplary embodiment of the present invention, the mating connector comprises: a mating housing which is mated with the housing of the connector; and a high-voltage mating module which is provided in the mating housing for electrical connection with the high-voltage module of the connector. The high-voltage module is fastened to the high-voltage mating module for electrical connection with the high-voltage mating module.

According to another exemplary embodiment of the present invention, the high-voltage mating module comprises a mating terminal which is formed with a threaded hole, the fastener is threaded with the threaded hole of the mating terminal to fasten the terminal and the mating terminal together, achieving electrical connection between the high-voltage module and the high-voltage mating module.

According to another exemplary embodiment of the present invention, the high-voltage mating module comprises: a mating terminal; and a nut fixed to the mating terminal. The fastener passes through the mating terminal and is threaded with the nut to fasten the terminal and the mating terminal together, achieving electrical connection between the high-voltage module and the high-voltage mating module.

**In** the aforementioned exemplary embodiments according to the present invention, when the high-voltage module is not fastened to the high-voltage mating module, the detection component cannot be rotated from the initial position to the detection position. Only when the high-voltage module has been fastened to the high-voltage mating module, can the detection component be rotated from the initial position to the detection position. Therefore, the present invention can accurately check whether the high-voltage module has been fastened to the high-voltage mating module by the detection component, improving the accuracy and efficiency of the inspection.

**In** addition, in the aforementioned exemplary embodiments according to the present invention, the detection component cannot be rotated from the initial position to the detection position when the fastener is not tightened. The detection component can be rotated from the initial position to the inspection position only when the fastener has been tightened. Therefore, the present invention can accurately check whether the fastener has been tightened by the detection component, improving the accuracy and efficiency of the inspection, and effectively preventing the problem of forgetting to tighten the fastener.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a connector assembly according to an exemplary embodiment of the present invention, wherein the fasteners have not yet been tightened and the detection component is in the initial position;
Figure 2 shows a cross-sectional view of a connector assembly according to an exemplary embodiment of the present invention, wherein the fasteners have not yet been tightened and the detection component is in the initial position;
Figure 3 shows an illustrative exploded view of a connector assembly according to an exemplary embodiment of the present invention, wherein the fasteners have not yet been tightened and the detection component is in the initial position;
Figure 4 shows an exploded sectional view of a connector assembly according to an exemplary embodiment of the present invention, wherein the fasteners have not yet been tightened and the detection component is in the initial position;
Figure 5 shows an illustrative exploded view of a connector according to an exemplary embodiment of the present invention, wherein the fasteners have not yet been tightened;
Figure 6 shows an illustrative perspective view of a detection component of a connector according to an exemplary embodiment of the present invention;
Figure 7 shows a cross-sectional view of a connector assembly according to an exemplary embodiment of the present invention, wherein the fastener has been tightened and the detection component is in the initial position;
Figure 8 shows a cross-sectional view of a connector assembly according to an exemplary embodiment of the present invention, wherein the fastener has been tightened and the detection component has been rotated to the detection position; and
Figure 9 shows an illustrative perspective view of a connector assembly according to an exemplary embodiment of the present invention, wherein the fasteners have been tightened and the detection component has been rotated to the detection position.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a connector. The connector comprises: a housing; a high-voltage module which is provided in the housing and is suitable for being fastened to a high-voltage mating module of a mating connector to electrically connect with the high-voltage mating module; and a detection component which is rotatably installed on the exterior of the housing for detecting whether the high-voltage module has been fastened to the high-voltage mating module. When the high-voltage module is not fastened to the high-voltage mating module, the high-voltage module is in a position that interferes with the detection component, so that the detection component cannot be rotated from an initial position to a detection position; when the high-voltage module has been fastened to the high-voltage mating module, the high-voltage module is in a position that does not interfere with the detection component, allowing the detection component to be rotated from the initial position to the detection position.

According to another general concept of the present invention, there is provided a connector assembly. The connector assembly comprises: the above connector; and a mating connector which is mated with the connector.

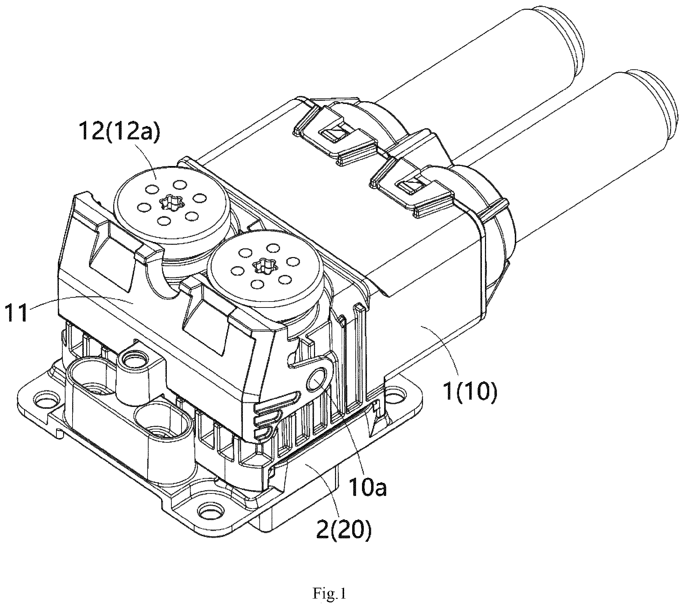

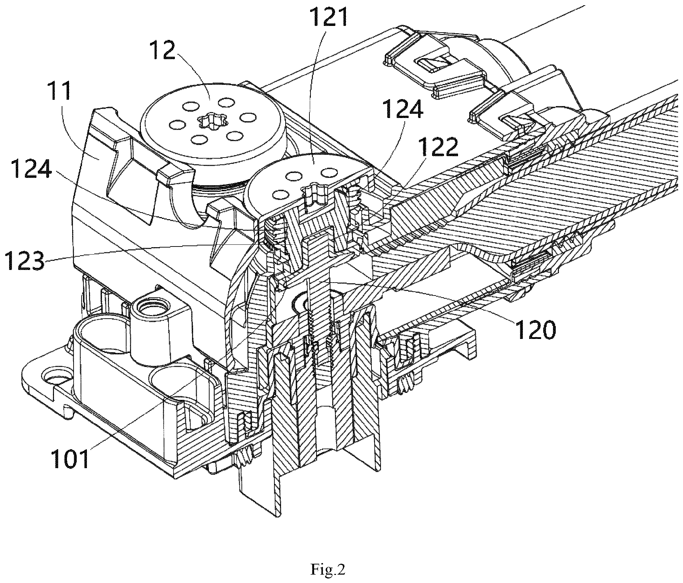

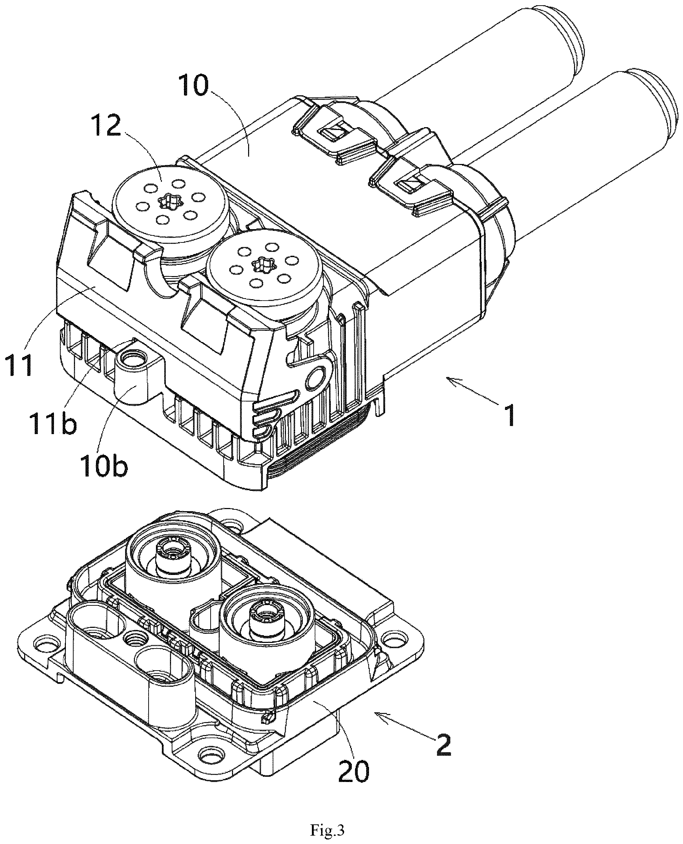

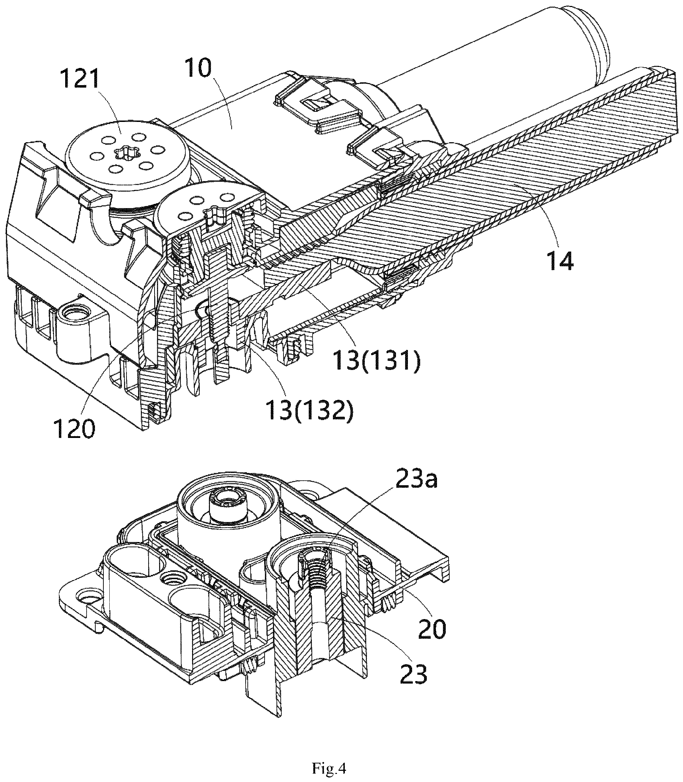

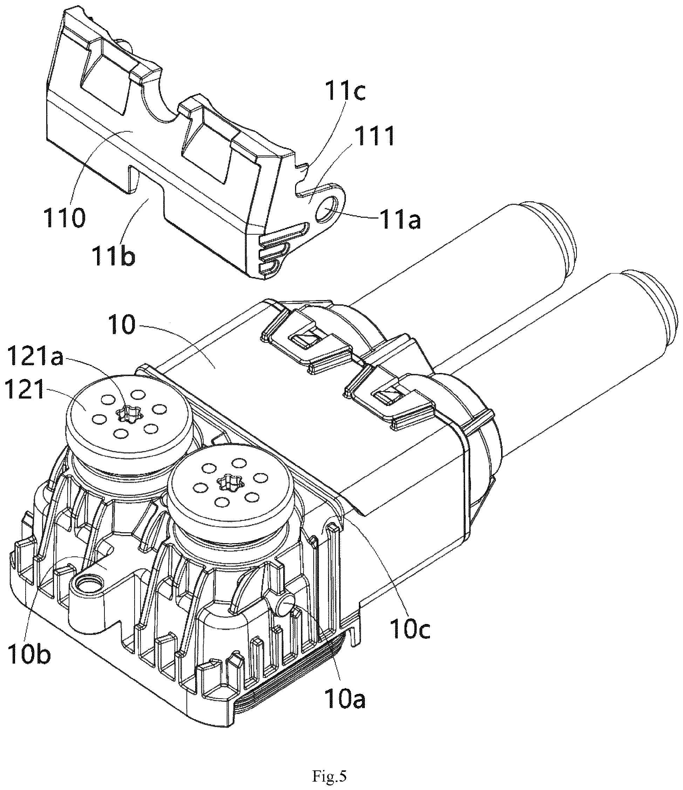

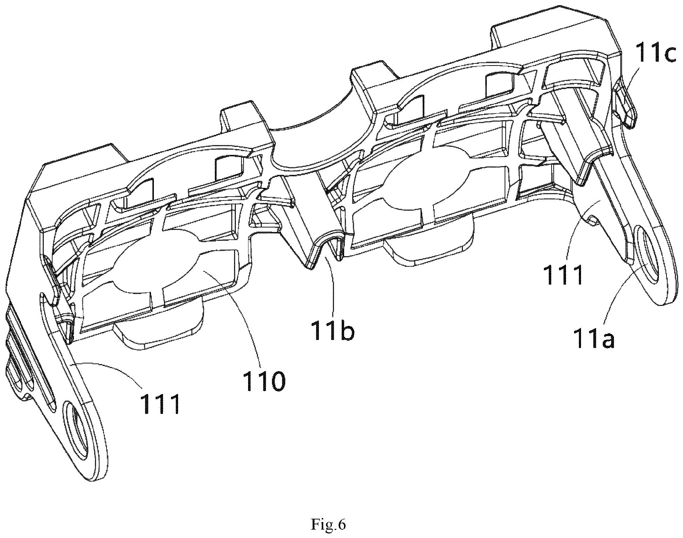

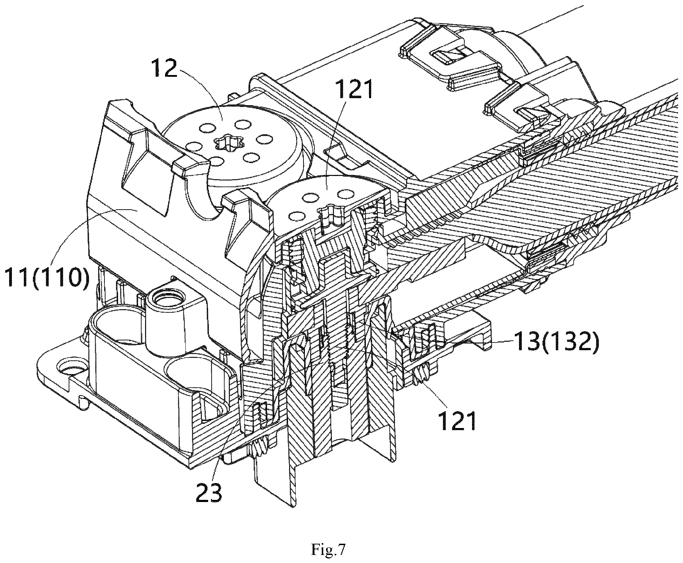

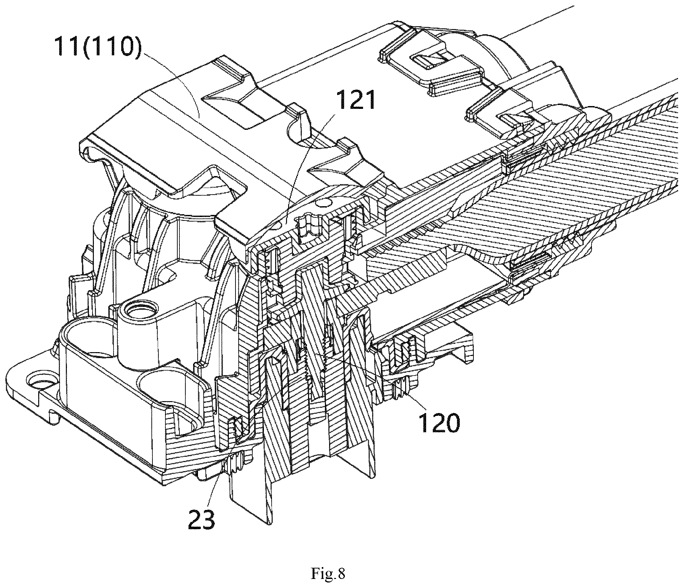

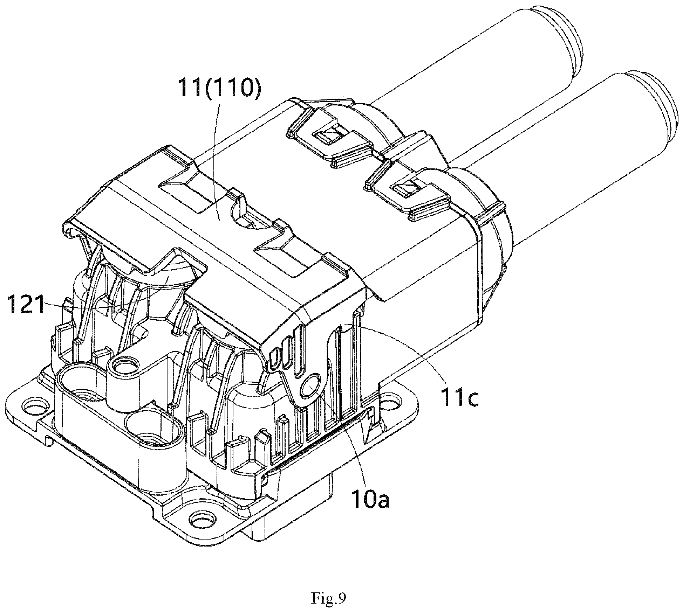

Figure 1 shows an illustrative perspective view of a connector assembly according to an exemplary embodiment of the present invention, where fastener 12 has not yet been tightened and detection component 11 is in the initial position; Figure 2 shows a cross-sectional view of a connector assembly according to an exemplary embodiment of the present invention, where fastener 12 has not yet been tightened and detection component 11 is in the initial position; Figure 3 shows an illustrative exploded view of a connector assembly according to an exemplary embodiment of the present invention, where fastener 12 has not yet been tightened and detection component 11 is in the initial position; Figure 4 shows an exploded sectional view of a connector assembly according to an exemplary embodiment of the present invention, where fastener 12 has not yet been tightened and detection component 11 is in the initial position; Figure 5 shows an illustrative exploded view of connector 1 according to an exemplary embodiment of the present invention, where fastener 12 has not yet been tightened; Figure 6 shows an illustrative perspective view of the detection component 11 of the connector 1 according to an exemplary embodiment of the present invention; Figure 7 shows a cross-sectional view of a connector assembly according to an exemplary embodiment of the present invention, wherein fastener 12 has been tightened and detection component 11 is in the initial position; Figure 8 shows a cross-sectional view of a connector assembly according to an exemplary embodiment of the present invention, wherein fastener 12 has been tightened and detection component 11 has been rotated to the detection position; Figure 9 shows an illustrative perspective view of a connector assembly according to an exemplary embodiment of the present invention, wherein fastener 12 has been tightened and detection component 11 has been rotated to the detection position.

As shown in Figures 1 to 9, in an exemplary embodiment of the present invention, a connector 1 is disclosed. The connector 1 includes a housing 10, a high-voltage module, and a detection component 11. The high-voltage module is installed in the housing 10 and is suitable for being fastened to the high-voltage mating module of a mating connector 2 to be electrically connected with the high-voltage mating module. The detection component 11 is rotatably installed on the exterior of the housing 10 to detect whether the high-voltage module has been fastened to the high-voltage mating module. When the high-voltage module is not fastened to the high-voltage mating module, the high-voltage module is in a position that interferes with the detection component 11, preventing the detection component 11 from being rotated from an initial position to a detection position. When the high-voltage module has been fastened to the high-voltage mating module, the high-voltage module is in a position that does not interfere with the detection component 11, allowing the detection component 11 to be rotated from the initial position to the detection position.

As shown in Figures 1 to 9, in the illustrated embodiment, when the high-voltage module is not fastened to the high-voltage mating module, the detection component 11 cannot be rotated from the initial position to the detection position. Only when the high-voltage module has been fastened to the high-voltage mating module, can the detection component 11 be rotated from the initial position to the detection position. Therefore, the present invention can accurately check whether the high-voltage module has been fastened to the high-voltage mating module using the detection component 11, improving the accuracy and efficiency of the inspection.

As shown in Figures 1 to 9, in the illustrated embodiment, the high-voltage module includes a fastener 12, which is suitable for threaded connection with the high-voltage mating module for fastening the high-voltage module to the high-voltage mating module. When the fastener 12 is not tightened to the high-voltage mating module, the fastener 12 is in a position that interferes with detection component 11, preventing the detection component 11 from being rotated from the initial position to the detection position; When the fastener 12 has been tightened to the high-voltage mating module, the fastener 12 is moved to a position that does not interfere with the detection component 11, allowing the detection component 11 to be rotated from the initial position to the detection position.

As shown in Figures 1 to 9, in the illustrated embodiment, when the fastener 12 is not tightened, the detection component 11 cannot be rotated from the initial position to the detection position. Only when the fastener 12 has been tightened, can the detection component 11 be rotated from the initial position to the detection position. Therefore, the present invention can accurately check whether the fastener 12 has been tightened using the detection component 11, improving inspection accuracy and efficiency, and effectively preventing the problem of forgetting to tighten the fastener 12.

As shown in Figures 1 to 9, in the illustrated embodiment, the connector 1 includes multiple fasteners 12, and the detection component 11 is used to simultaneously detect whether multiple fasteners 12 have been tightened to the high-voltage mating module of mating connector 2. When any one of the multiple fasteners 12 is not tightened to the high-voltage mating module of the mating connector 2, the detection component 11 cannot be rotated from the initial position to the detection position. Only when multiple fasteners 12 have all been tightened to the high-voltage mating module of the mating connector 2, the detection component 11 can be rotated from the initial position to the detection position.

As shown in Figures 1 to 9, in the illustrated embodiment, the fastener 12 has an outer end 12a exposed from the housing 10. The outer end 12a of fastener 12 is suitable for engagement with an operating tool (not shown) to be able to tighten or loosen the fastener 12 through the operating tool engaged with the outer end 12a. When the fastener 12 is not tightened to the high-voltage mating module of the mating connector 2, the outer end 12a of the fastener 12 is in a position that interferes with the detection component 11 (as shown in Figure 1-2), preventing the detection component 11 from being rotated from the initial position to the detection position. When the fastener 12 has been tightened to the high-voltage mating module of the mating connector 2, the outer end 12a of the fastener 12 is in a position that does not interfere with the detection component 11 (as shown in Figure 7-9), allowing the detection component 11 to be rotated from the initial position to the detection position.

As shown in Figures 1 to 9, in the illustrated embodiment, the detection component 11 includes a pair of side arms 111 and a top cover 110. One ends of the pair of side arms 111 are rotatably connected to both sides of the housing 10, respectively. The top cover 110 is connected between the other ends of a pair of side arms 111. When the fastener 12 is not tightened to the high-voltage mating module of the mating connector 2, the outer end 12a of the fastener 12 interferes with the top cover 110 of the detection component 11, preventing the detection component 11 from being rotated from the initial position to the detection position. When the fastener 12 has been tightened to the high-voltage mating module of the mating connector 2, the outer end 12a of the fastener 12 does not interfere with the top cover 110 of the detection component 11, allowing the detection component 11 to be rotated from the initial position to the detection position.

As shown in Figures 1 to 9, in the illustrated embodiment, pivot holes 11a are respectively formed in one ends of the pair of side arms 111, and protruding pivot shafts 10a are respectively formed on both sides of the housing 10. The pivot shafts 10a are rotatably engaged with the pivot holes 11a, allowing the detection component 11 to rotate around the pivot shafts 10a.

As shown in Figures 1 to 9, in the illustrated embodiment, when the detection component 11 is in the initial position, the outer end 12a of the fastener 12 is exposed outside the top cover 110 of the detection component 11, allowing the operating tool to engage with the outer end 12a of the fastener 12 to tighten or loosen the fastener 12.

As shown in Figures 1 to 9, in the illustrated embodiment, when the detection component 11 is in the detection position, the outer end 12a of the fastener 12 is hidden in the top cover 110 of the detection component 11, so that the operating tool cannot engage with the outer end 12a of the fastener 12 to prevent the already tightened fastener 12 from being accidentally loosened by the operating tool. This can improve the safety of connector usage.

As shown in Figures 1 to 9, in the illustrated embodiment, a joint part 121a suitable for engagement with an operating tool is formed on the top of the outer end 12a of the fastener 12, so that the fastener 12 can be tightened or loosened by the operating tool engaged with the joint part 121a. When the detection component 11 is in the detection position, the top cover 110 of the detection component 11 covers the joint part 121a of the fastener 12, so that the operating tool cannot engage with the fastener 12, to prevent the already tightened fastener 12 from being accidentally loosened by the operating tool.

As shown in Figures 1 to 9, in the illustrated embodiment, the top cover 110 of the detection component 11 includes a first side and a second side that are opposite in the rotation direction of the detection component 11. When the detection component 11 is in the initial position and the fastener 12 is not tightened, the outer end 12a of the fastener 12 is pressed against the first side of the top cover 110 of the detection component 11, so that the detection component 11 cannot be rotated from the initial position to the detection position.

As shown in Figures 1 to 9, in the illustrated embodiment, a first positioning protrusion 11c is formed on the first side of the top cover 110 of the detection component 11, and a first positioning groove 10c suitable for mating with the first positioning protrusion 11c is formed on the outside of the housing 10. When the detection component 11 is in the detection position, the first positioning protrusion 11c is engaged with the first positioning groove 10c to position the detection component 11 in the detection position.

As shown in Figures 1 to 9, in the illustrated embodiment, a second positioning groove 11b is formed on the second side of the top cover 110 of the detection component 11, and a second positioning protrusion 10b suitable for mating with the second positioning groove 11b is formed on the outside of the housing 10. When the detection component 11 is in the initial position, the second positioning protrusion 10b is engaged with the second positioning groove 11b to position the detection component 11 in the initial position.

As shown in Figures 1 to 9, in the illustrated embodiment, the high-voltage module of the connector 1 further includes a terminal 13, which is arranged in the housing 10. The fastener 12 is used to fasten the terminal 13 of the connector 1 to a mating terminal 23 of the mating connector 2, ensuring reliable electrical contact between the terminal 13 and the mating terminal 23.

As shown in Figures 1 to 9, in the illustrated embodiment, the high-voltage module of the connector 1 also includes a cable 14. One end of the cable 14 extends into the housing 10 and is electrically connected to the terminal 13. When the terminal 13 is fastened to the mating terminal 23, the cable 14 is electrically connected to the mating terminal 23 through the terminal 13.

As shown in Figures 1 to 9, in the illustrated embodiment, the fastener 12 passes through the terminal 13 and is suitable for threaded connection with the mating terminal 23 or the nut inside the mating connector 2 to fasten the terminal 13 to the mating terminal 23.

As shown in Figures 1 to 9, in the illustrated embodiment, a mounting port 101 is formed on the housing 10, and the fastener 12 enters into the housing 10 through the mounting port 101. The fastener 12 includes a bolt 120 and an end cap 121. The bolt 120 is suitable for threaded connection with the mating terminal 23 or the nut inside the mating connector 2. The end cap 121 is attached to the head of the bolt 120 and located outside of the housing 10, used to cover the mounting port 101. When the bolt 120 is tightened, the end cap 121 covers the mounting port 101 of the housing 10 and makes electrical contact with the outer peripheral surface of the peripheral wall of the mounting port 101 to prevent electromagnetic leakage. In the illustrated embodiment, the end cap 121 is served as the outer end 12a of the fastener 12 that is exposed from the outside of the housing 10. The housing 10 is an outer shielding shell of the connector. The connector 1 also includes an insulation inner housing arranged in the outer shielding shell, which is used to electrically isolate the conductive components inside the housing 10 from the housing 10.

As shown in Figures 1 to 9, in the illustrated embodiment, a joint part 121a suitable for engagement with an operating tool is formed on the top of the end cap 121, so that the bolt 120 can be tightened or loosened by the operating tool engaged with the joint part 121a. In the illustrated embodiment, the joint part 121a is a hole with a cross section in the shape of a plum blossom.

As shown in Figures 1 to 9, in the illustrated embodiment, when the bolt 120 is not tightened, the end cap 121 is in a position that interferes with the detection component 11, preventing the detection component 11 from being rotated from the initial position to the detection position. When the bolt 120 has been tightened, the end cap 121 is in a position that does not interfere with the detection component 11, allowing the detection component 11 to be rotated from the initial position to the detection position.

As shown in Figures 1 to 9, in the illustrated embodiment, a first insulator 122 is formed on the head of the bolt 120, and a second insulator 123 is formed on the inner side of the end cap 121. The first insulator 122 is joined to the second insulator 123 for joining the bolt 120 to the end cap 121 and electrically isolating the bolt 120 from the end cap 121.

As shown in Figures 1 to 9, in the illustrated embodiment, the fastener 12 further includes a sealing ring 124, which is fitted onto the second insulator 123. When the bolt 120 is tightened, the sealing ring 124 is radially compressed between the second insulator 123 and the inner peripheral surface of the peripheral wall of the mounting port 101 to seal the mounting port 101, thereby preventing water vapor and dust from entering the housing 10 through the mounting port 101.

As shown in Figures 1 to 9, in the illustrated embodiment, the terminal 13 includes a first terminal 13 and a second terminal 13. The first terminal 13 is flat and welded to one end of the cable 14. The second terminal 13 is cylindrical and riveted to the first terminal 13. When the bolt 120 is tightened, the end face of the second terminal 13 makes axial electrical contact with the end face of the mating terminal 23 to achieve electrical connection between the terminal 13 and the mating terminal 23.

As shown in Figures 1 to 9, in another exemplary embodiment of the present invention, a connector assembly is also disclosed. The connector component includes: a connector 1 and a mating connector 2. The mating connector 2 is mated with the connector 1.

As shown in Figures 1 to 9, in the illustrated embodiment, the mating connector 2 includes a mating housing 20 and a high-voltage mating module. The housing 20 is mated with the housing 10 of the connector 1. The high-voltage mating module is installed in the mating housing 20 for electrical connection with the high-voltage module of the connector 1. The high-voltage module is fastened to the high-voltage mating module for electrical connection with the high-voltage mating module.

As shown in Figures 1 to 9, in the illustrated embodiment, the high-voltage mating module includes a mating terminal 23, and a threaded hole 23a is formed in the mating terminal 23. The fastener 12 is threaded with the threaded hole 23a of the mating terminal 23 to fasten the terminal 13 and the mating terminal 23 together, achieving electrical connection between the high-voltage module and the high-voltage mating module.

As shown in Figures 1 to 9, in another exemplary embodiment of the present invention, the high-voltage mating module includes a mating terminal 23 and a nut (not shown), and the nut is fixed to the mating terminal 23. The fastener 12 passes through the mating terminal 23 and is threaded with the nut to secure the terminal 13 and the mating terminal 23 together, achieving electrical connection between the high-voltage module and the high-voltage mating module.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A connector, comprising:
a housing (10);
a high-voltage module which is provided in the housing (10) and is suitable for being fastened to a high-voltage mating module of a mating connector (2) to electrically connect with the high-voltage mating module; and
a detection component (11) which is rotatably installed on the exterior of the housing (10) for detecting whether the high-voltage module has been fastened to the high-voltage mating module,
wherein when the high-voltage module is not fastened to the high-voltage mating module, the high-voltage module is in a position that interferes with the detection component (11), so that the detection component (11) cannot be rotated from an initial position to a detection position;
wherein when the high-voltage module has been fastened to the high-voltage mating module, the high-voltage module is in a position that does not interfere with the detection component (11), allowing the detection component (11) to be rotated from the initial position to the detection position.

2. The connector according to claim 1,
wherein the high-voltage module comprises:
a fastener (12) which is suitable for threaded connection with the high-voltage mating module and is used to fasten the high-voltage module to the high-voltage mating module,
wherein when the fastener (12) is not tightened to the high-voltage mating module, the fastener (12) is in a position that interferes with the detection component (11), so that the detection component (11) cannot be rotated from the initial position to the detection position;
wherein when the fastener (12) has been tightened to the high-voltage mating module, the fastener (12) is moved to a position that does not interfere with the detection component (11), so that the detection component (11) can be rotated from the initial position to the detection position.

3. The connector according to claim 2,
wherein the connector (1) comprises multiple fasteners (12), and the detection component (11) is used to simultaneously detect whether all fasteners (12) have been tightened to the high-voltage mating module;
wherein when any one of the multiple fasteners (12) is not tightened to the high-voltage mating module, the detection component (11) cannot be rotated from the initial position to the detection position;
wherein when the multiple fasteners (12) have all been tightened to the high-voltage mating module, the detection component (11) can be rotated from the initial position to the detection position.

4. The connector according to claim 2,
wherein the fastener (12) has an outer end (12a) exposed from the housing (10), which is adapted to be engaged with an operating tool to be able to tighten or loosen the fastener (12) by the operating tool engaged with the outer end (12a);
wherein when the fastener (12) is not tightened to the high-voltage mating module, the outer end (12a) of the fastener (12) is in a position that interferes with the detection component (11), so that the detection component (11) cannot be rotated from the initial position to the detection position;
wherein when the fastener (12) has been tightened to the high-voltage mating module, the outer end (12a) of the fastener (12) is in a position that does not interfere with the detection component (11), allowing the detection component (11) to be rotated from the initial position to the detection position.

5. The connector according to claim 4,
wherein the detection component (11) includes:
a pair of side arms (111), one ends of which are rotatably connected to both sides of the housing (10), respectively; and
a top cover (110) connected between the other ends of the pair of side arms (111),
wherein when the fastener (12) is not tightened to the high-voltage mating module, the outer end (12a) of the fastener (12) interferes with the top cover (110) of the detection component (11), preventing the detection component (11) from being rotated from the initial position to the detection position;
wherein when the fastener (12) has been tightened to the high-voltage mating module, the outer end (12a) of the fastener (12) does not interfere with the top cover (110) of the detection component (11), allowing the detection component (11) to be rotated from the initial position to the detection position.

6. The connector according to claim 5,
wherein pivot holes (11a) are respectively formed in one ends of the pair of side arms (111), and protruding pivot shafts (10a) are respectively formed on both sides of the housing (10), the pivot shafts (10a) are rotatably engaged with the pivot holes (11a), allowing the detection component (11) to rotate around the pivot shafts (10a).

7. The connector according to claim 5,
wherein when the detection component (11) is in the initial position, the outer end (12a) of the fastener (12) is exposed to the outside of the top cover (110) of the detection component (11), so that the operating tool can engage with the outer end (12a) of the fastener (12) to tighten or loosen the fastener (12).

8. The connector according to claim 5,
wherein when the detection component (11) is in the detection position, the outer end (12a) of the fastener (12) is hidden in the top cover (110) of the detection component (11), so that the operating tool cannot engage with the outer end (12a) of the fastener (12) to prevent the tightened fastener (12) from being accidentally loosened by the operating tool.

9. The connector according to claim 5,
wherein a joint part (121a) suitable for engagement with the operating tool is formed on the top of the outer end (12a) of the fastener (12), so as to be able to tighten or loosen the fastener (12) through the operating tool engaged with the joint part (121a);
wherein when the detection component (11) is in the detection position, the top cover (110) of the detection component (11) covers the joint part (121a) of the fastener (12), so that the operating tool cannot engage with the fastener (12) to prevent the already tightened fastener (12) from being accidentally loosened by the operating tool.

10. The connector according to claim 5,
wherein the top cover (110) of the detection component (11) comprises a first side and a second side opposite to each other in the rotation direction of the detection component (11);
wherein when the detection component (11) is in the initial position and the fastener (12) is not tightened, the outer end (12a) of the fastener (12) is pressed against the first side of the top cover (110) of the detection component (11), so that the detection component (11) cannot be rotated from the initial position to the detection position.

11. The connector according to claim 10,
wherein a first positioning protrusion (11c) is formed on the first side of the top cover (110) of the detection component (11), and a first positioning groove (10c) suitable for mating with the first positioning protrusion (11c) is formed on the outside of the housing (10);
wherein when the detection component (11) is in the detection position, the first positioning protrusion (11c) is engaged with the first positioning groove (10c) to position the detection component (11) at the detection position;
wherein a second positioning groove (11b) is formed on the second side of the top cover (110) of the detection component (11), and a second positioning protrusion (10b) suitable for mating with the second positioning groove (11b) is formed on the outside of the housing (10);
wherein when the detection component (11) is in the initial position, the second positioning protrusion (10b) is engaged with the second positioning groove (11b) to position the detection component (11) at the initial position.

12. The connector according to any one of claims 2-11,
wherein the high-voltage module further comprises:
a terminal (13) which is provided in the housing (10),
wherein the fastener (12) is used to fasten the terminal (13) of the connector (1) to a mating terminal (23) of the mating connector (2) to ensure reliable electrical contact between the terminal (13) and the mating terminal (23).

13. The connector according to claim 12,
wherein the high-voltage module further comprises:
a cable (14), one end of which extends into the housing (10) and is electrically connected to the terminal (13),
wherein when the terminal (13) is fastened to the mating terminal (23), the cable (14) is electrically connected to the mating terminal (23) via the terminal (13),
wherein the fastener (12) passes through the terminal (13) and is suitable for threaded connection with the mating terminal (23) or a nut inside the mating connector (2) to fasten the terminal (13) to the mating terminal (23).

14. The connector according to claim 13,
wherein a mounting port (101) is formed in the housing (10), and the fastener (12) extends into the housing (10) through the mounting port (101);
wherein the fastener (12) comprises:
a bolt (120) which is suitable for threaded connection with the mating terminal (23) or the nut inside the mating connector (2); and
an end cap (121) which is engaged to the head of the bolt (120) and located outside the housing (10), used to cover the mounting port (101),
wherein when the bolt (120) is tightened, the end cap (121) covers the mounting port (101) of the housing (10) and makes electrical contact with the outer peripheral surface of the peripheral wall of the mounting port (101) to prevent electromagnetic leakage.

15. The connector according to claim 14,
wherein a joint part (121a) suitable for engagement with an operating tool is formed on the top of the end cap (121), so that the bolt (120) can be tightened or loosened by the operating tool engaged with the joint part (121a);
wherein when the bolt (120) is not tightened, the end cap (121) is in a position that interferes with the detection component (11), so that the detection component (11) cannot be rotated from the initial position to the detection position;
wherein when the bolt (120) has been tightened, the end cap (121) is in a position that does not interfere with the detection component (11), allowing the detection component (11) to be rotated from the initial position to the detection position.

16. The connector according to claim 15,
wherein a first insulator (122) is formed on the head of the bolt (120), and a second insulator (123) is formed on the inner side of the end cap (121), the first insulator (122) is engaged to the second insulator (123) for engaging the bolt (120) to the end cap (121) and electrically isolating the bolt (120) from the end cap (121),
wherein the fastener (12) further comprises:
a sealing ring (124) which is fitted onto the second insulator (123),
wherein when the bolt (120) is tightened, the sealing ring (124) is radially compressed between the second insulator (123) and the inner peripheral surface of the peripheral wall of the mounting port (101) to seal the mounting port (101).

17. The connector according to claim 14,
wherein the terminal (13) comprises:
a first terminal (13) which is flat and welded to one end of the cable (14); and
a second terminal (13) which is cylindrical and riveted to the first terminal (13),
wherein when the bolt (120) is tightened, the end face of the second terminal (13) makes axial electrical contact with the end face of the mating terminal (23) to achieve electrical connection between the terminal (13) and the mating terminal (23).

18. A connector assembly, comprising:
the connector (1) according to any one of claims 1-17; and
a mating connector (2) which is mated with the connector (1),
wherein the mating connector (2) comprises:
a mating housing (20) which is mated with the housing (10) of the connector (1); and
a high-voltage mating module which is provided in the mating housing (20) for electrical connection with the high-voltage module of the connector (1),
wherein the high-voltage module is fastened to the high-voltage mating module for electrical connection with the high-voltage mating module.
